# EUROPÄISCHE PATENTSCHRIFT

(11) **EP 1 434 744 B1**
(45) Veröffentlichungstag und Bekanntmachung des Hinweises auf die Patenterteilung: **04.05.2005**
(21) Anmeldenummer: 03702174.8
(22) Anmeldetag: 09.01.2003
(51) Int. Cl.: C03B 33/03, B65G 49/06

(54) **VERFAHREN UND VORRICHTUNG ZUM BEWEGEN UND POSITIONIEREN VON GLASTAFELN**
METHOD AND DEVICE FOR MOVING AND POSITIONING GLASS PLATES
PROCEDE ET DISPOSITIF POUR DEPLACER ET POSITIONNER DES PLAQUES DE VERRE

(30) Priorität: 04.10.2002 EP 02450224
(43) Veröffentlichungstag der Anmeldung: 07.07.2004
(62) Teilanmeldung aus: 03024693.8
(73) Patentinhaber: Tecnopat AG, 9008 St. Gallen (CH)
(72) Erfinder: LISEC, Peter, 3363 Amstetten-Hausmening (AT)
(74) Vertreter: Beer, Manfred, Dipl.-Ing.
(86) Internationale Anmeldenummer: PCT/AT2003/000006
(87) Internationale Veröffentlichungsnummer: WO 2004/035493

(56) Entgegenhaltungen:
- EP-A- 0 564 758
- PATENT ABSTRACTS OF JAPAN vol. 2000, no. 13, 5. Februar 2001 (2001-02-05) -& JP 2000 296435 A (CENTRAL GLASS CO LTD), 24. Oktober 2000 (2000-10-24)
- PATENT ABSTRACTS OF JAPAN vol. 017, no. 190 (C-1048), 14. April 1993 (1993-04-14) -& JP 04 342431 A (CENTRAL GLASS CO LTD), 27. November 1992 (1992-11-27)

## Beschreibung

Die Erfindung betrifft ein Verfahren zum Bewegen und Positionieren von Glastafeln und Glastafel-Zuschnitten beim Teilen von Glastafeln auf einer Vorrichtung zum Teilen von Glastafeln mit wenigstens einer Trennstelle und mit beidseits der Trennstelle angeordneten Auflageflächen für die zu teilende Glastafel und für nach dem Teilen derselben erhaltene Glastafel-Zuschnitte.

Die Erfindung betrifft weiters eine Vorrichtung zum Durchführen des Verfahrens mit wenigstens einer Trennvorrichtung, mit wenigstens einer als Tisch ausgebildeten Auflagefläche und mit wenigstens einer Einrichtung zum Fördern von Glastafeln auf dem Tisch.

Die hier in Betracht gezogenen Glastafeln sind beispielsweise Tafelglas (Float-Glas) und Verbundglas.

Die bekannten Vorrichtungen zum Teilen von Tafelglas ("Glasschneidetische"), wie sie beispielsweise aus der EP 0 564 758 A bekannt sind, besitzen zum Bewegen und Positionieren der Glastafeln Förderbänder und/oder Förderwellen, die in die Auflageflächen des Glasschneidetisches eingelassen sind und die über die Auflagefläche angehoben werden, wenn eine Glastafel zu transportieren ist.

Solche Förderbänder sind auch bei Vorrichtungen zum Teilen von Verbundglas (WO 95/16640 A = EP 0 708 741 A) bekannt.

Zum Bewegen von Glastafeln auf Glasschneidetischen ist es weiters bekannt, an der Schneidbrücke Mitnehmer für die Glastafeln vorzusehen. Bekannt sind an der Schneidbrücke befestigte Sauger (EP 0 192 290 A) oder am Rand einer Glastafel anlegbare Mitnehmer (US-A-5,944,244).

Glastafeln müssen auf Glasschneidetischen nicht nur genau, sondern auch rasch positioniert werden. Dies ist mit den bekannten Vorrichtungen nicht oder nur mit beträchtlichem Aufwand möglich. Dabei ist zu bedenken, dass Glastafeln mit einem Gewicht bis zu 1000 kg (Verbundglas) zu bewegen und genau zu positionieren sind. Des weiteren ist zu berücksichtigen, dass Glastafeln auf Glasschneidetischen in unterschiedliche Richtungen bewegt werden müssen, beispielsweise um X- und Y-Schnitte auszuführen.

Ein Verfahren mit den Merkmalen des einleitenden Teils des unabhängigen Verfahrensanspruches ist aus der EP 0 564 758 A bekannt. Bei dem Verfahren der EP 0 564 758 A werden für den Transport von zu teilenden Glastafeln und Glastafel-Zuschnitte Förderbänder verwendet, die in den Auflageflächen der Schneidetische vorgesehen sind, um die Glastafeln und Glastafel-Zuschnitte zu den Trennstellen zu bewegen.

Aus der JP 20002964535 A (Patent Abstracts of Japan vol. 2000, no. 13, 2001-02-05) ist es für das Bewegen von verformten Glasplatten bekannt, Luftkissen-Tische schräg zu stellen. Die Glasplatten werden bei der JP 20002964535 A durch Schrägstellen des Luftkissen-Tisches zunächst in einer Richtung und dann in einer dazu senkrechten Richtung in Anlage an Anschläge, die am Rand des Luftkissen-Tisches angeordnet sind, bewegt und dort festgelegt.

Der Erfindung liegt die Aufgabe zu Grunde, ein Verfahren und eine Vorrichtung der eingangs genannten Gattung anzugeben, die ein genaues, rasches und einfaches Bewegen von Glastafeln (Tafelglas und Verbundglas) beim Positionieren derselben erlauben und die ohne aufwändige Fördermittel für das Bewegen und Positionieren der zu teilenden Glastafeln oder weiter zu teilender Glastafel-Zuschnitte auskommen.

Diese Aufgabe wird erfindungsgemäß mit einem Verfahren gelöst, das die Merkmale des Anspruches 1 aufweist.

Was die Vorrichtung anlangt, wird diese Aufgabe mit einer Vorrichtung gelöst, welche die Merkmale des Vorrichtungshauptanspruches aufweist.

Bevorzugte und vorteilhafte Weiterbildungen des erfindungsgemäßen Verfahrens einerseits und der erfindungsgemäßen Vorrichtung anderseits sind Gegenstand der Unteransprüche.

Bei dem erfindungsgemäßen Verfahren wird so gearbeitet, dass die Auflagefläche, auf der die zu bewegende Glastafel liegt, so schräg gestellt (geneigt)ist oder wird, dass sie in Richtung auf eine definierte Anlagekante hin abfällt, und die auf ihr liegende Glastafel bis zu dieser Anlagekante gleitet. Die Glastafel oder ein Glastafel-Zuschnitt sind dann durch Anliegen an der wenigstens einen Anlagekante positioniert.

Durch Wahl des Winkels der Neigung der Auflagefläche und durch Wahl des Reibungskoeffizienten zwischen Glastafel und Oberfläche der Auflagefläche kann unterschiedlich großen und schweren Glastafeln Rechnung getragen werden.

Bei der erfindungsgemäßen Verfahrensweise wird so gearbeitet, dass eine an wenigstens einer eine Referenzlinie bildenden Anlagekante anliegende Glastafel durch kraftschlüssiges Kuppeln der Glastafel mit einem Fördermittel um definierte Strecken bewegt wird, um sie definiert einer Trennstelle zuzuführen, an der die Glastafel geschnitten (geritzt) wird.

In einer bevorzugten Ausführungsform gleiten die Glastafeln auf einem zwischen der Auflagefläche und der Glastafel gebildeten Luftkissen. Die Verwendung eines Luftkissens als Gleitfläche für die Glastafeln hat auch den Vorteil, dass man die Reibung zwischen Glastafel und Auflagefläche durch Einstellen des Drucks, mit dem Luft aus den Luftkissenöffnungen in der Auflagefläche ausströmt, auf den jeweils gewünschten Wert einstellen und bei Bedarf während der Bewegung einer Glastafel ändern kann. Dies bietet z.B. die Möglichkeit, am Beginn einer Bewegung der Glastafel die Reibung zu verringern und die Reibung vor dem Ende der Bewegung der Glastafel, beispielsweise wenn sie sich der Referenzlinie (Anlagekante) annähert, durch Absenken des Drucks der das Luftkissen bildenden Luft zu erhöhen.

Das erfindungsgemäße Verfahren erlaubt es auch, geteilte Glastafeln, insbesondere Teile von Glastafeln, die nach dem Schnitt der Traveren (X-Schnitte) erhalten werden, weiter zu bewegen und zu positionieren und so der nächsten Trennstelle, in der Y-Schnitte ausgeführt werden, genau positioniert zuzuführen.

Das Positionieren von Glastafel-Zuschnitten erfolgt vorzugsweise so, dass ein Glastafel-Zuschnitt durch Schrägstellen der Auflagefläche nach der ersten Trennstelle mit einer seiner Ecken in einen Referenzpunkt bewegt wird, der beispielsweise durch zwei im Winkel von 90° zueinander stehende Anlagekanten definiert ist.

Insoweit die Vorrichtung betroffen ist, sind die Auflagetische vor und nach den Trennvorrichtungen, also der Zuführtisch der ersten Trennvorrichtung (für X-Schnitte), der zweite Tisch, mit dem die Glastafel-Zuschnitte nach dem ersten Schnitt (X-Schnitt) zur zweiten Trennvorrichtung (für Y-Schnitte) bewegt werden, und schließlich der Auslauftisch in Richtung auf wenigstens eine Anlagekante abfallend schräggestellt oder gegebenenfalls zusätzlich kippbar ausgebildet, so dass sie unter einem Winkel zur Horizontalen ausgerichtet sind.

Des weiteren ist bei der erfindungsgemäßen Vorrichtung am Rand jedes Tisches wenigstens eine Anlagekante als Referenzlinie ausgebildet, die in der Regel zur nachgeordneten Trennstelle normal ausgerichtet ist. Diese Anlagekante (Referenzlinie) ist beispielsweise ein Förderband. Eine vom Förderband entlang der Anlagekante zu bewegende Glastafel oder ein Glastafel-Zuschnitt werden mit dem jeweiligen Förderband gekuppelt. Dieses Kuppeln erfolgt beispielsweise über wenigstens einen Kupplungs-Sauger, der auf einer Schiene parallel zum Förderband geführt ist, und nach dem Anlegen an die Glastafel in Richtung auf das Förderband zu belastbar ist, so dass zwischen Förderband und Glastafel ein Kraftschluss entsteht, der es erlaubt, die Glastafel mit Hilfe des Förderbandes auf der Auflagefläche gleitend zu bewegen. Ein gesonderter Antrieb für den Schlitten, der den Kupplungs-Sauger trägt, um diesen entlang der Anlagekante zu bewegen ist nicht vorgesehen.

Weitere Einzelheiten und Merkmale sowie Vorteile der Erfindung ergeben sich aus der nachstehenden Beschreibung eines bevorzugten Ausführungsbeispieles unter Bezugnahme auf die Zeichnungen, in der schematisch eine Schneidanlage (für Verbundglas) gezeigt ist.

Es zeigt:
Fig. 1 eine (Verbund-)Glasschneideanlage in Draufsicht,
Fig. 2 eine (Verbund-)Glasschneideanlage in Schrägansicht,
Fig. 3 schematisch einen Sauger zum Kuppeln einer Glastafel in einem Förderband,
Fig. 4 eine abgeänderte Ausführungsform mit einer zweiten Fördereinrichtung im Bereich vor der ersten Brennstelle, und
Fig. 5 schematisch einen Sauger an der Fördervorrichtung von Fig. 4.

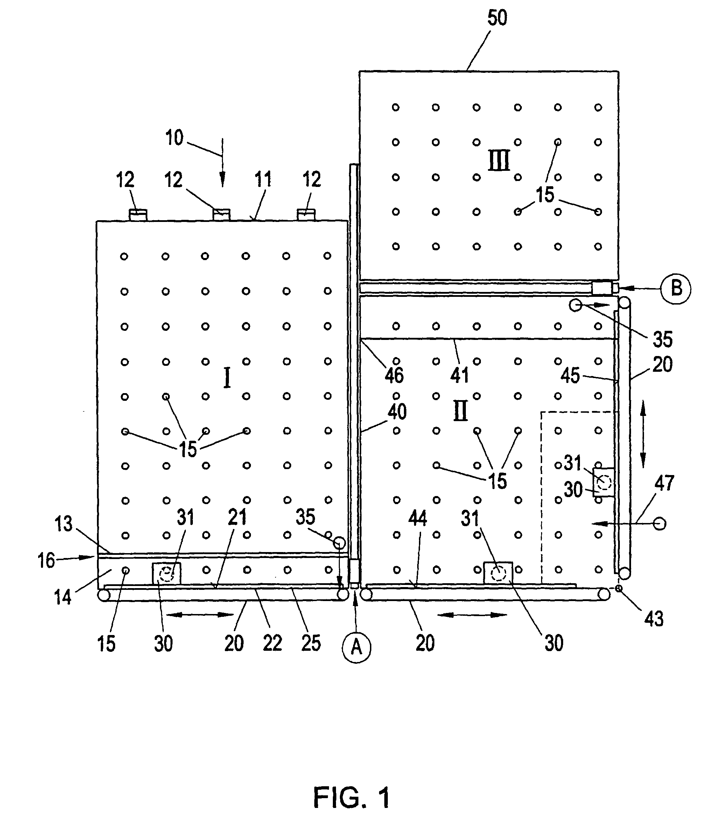

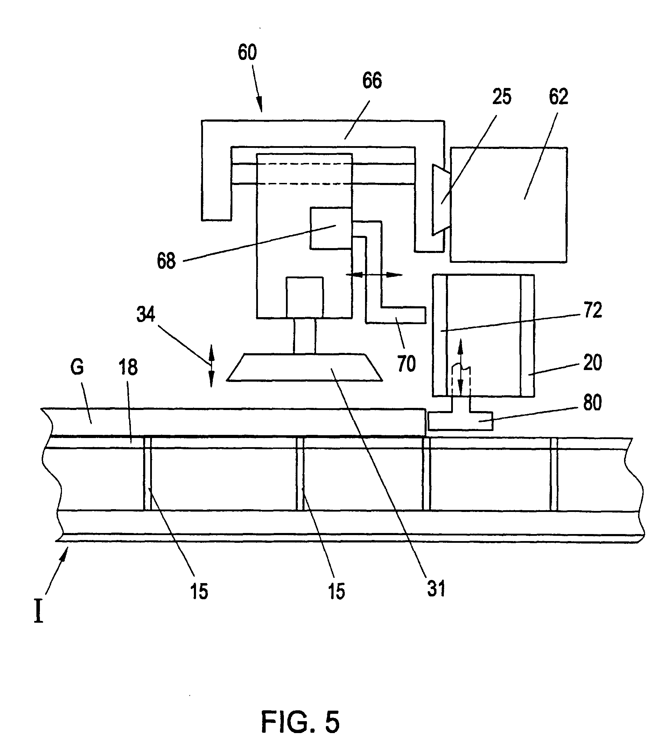

In den in den Fig. 1 bis 5 gezeigten Ausführungsformen ist die dargestellte Anlage für das Teilen von Verbundglas ausgebildet. Dies bedeutet, dass in jeder Trennstelle nicht nur Einrichtungen zum Ritzen von Verbundglas von oben und von unten her, sondern auch Einrichtungen zum Brechen von geritztem Verbundglas und zum Durchtrennen der Kunststofffolie zwischen den beiden Glasscheiben des Verbundglas vorgesehen sind.

Wenn die erfindungsgemäße Anlage als Anlage zum Teilen von normalem Glas bestimmt ist, ist in der Regel so, dass das Ritzen der Glastafel entlang der Aufteilungskontur gesondert vom in den Trennstellen A, B ausgeführten Brechen der geritzten Glastafeln in die Glaszuschnitte erfolgt, wie dies beispielsweise in der US 5 857 603 A beschrieben ist.

Die Schneidanlage für Verbundglas besitzt einen ersten Tisch I, auf den in Richtung des Pfeiles 10 Glastafeln aufgelegt werden. Der Tisch I kann auch um seine einlaufseitige Kante 11 hochklappbar sein, so dass auf ihm Glastafeln aus einem Glastafellager auf Auflagehaken 12 an diesem Rand 11 aufgestellt und dann durch Zurücklappen des Tisches I in eine im wesentlichen horizontale Ausgangs-Lage umgelegt werden können.

An dem mit den Haken 12 bestückten Rand 11 gegenüberliegenden Rand 13 schließt an den Tisch I ein ortsfester Streifen 14 an.

Der Tisch I und der ortsfeste Streifen 14 sind vorzugsweise als Luftkissentische ausgebildet, d.h. es sind über ihre Auflageflächen verteilt Öffnungen 15 vorgesehen, aus denen Druckluft ausströmt, so dass eine auf dem Tisch I liegende Glastafel auf einem Luftkissen schwimmt.

Die Auflagefläche des Tisches I kann so wie die der noch zu erläuternden Tische II und III auf der Auflagefläche des Tisches I, z.B. mit Rollen bestückt sein, so dass eine auf der Auflagefläche liegende Glastafel leicht bewegt werden kann.

Der Tisch I, genauer seine Auflagefläche ist in seiner Grundstellung (Ausgangs-Lage) zur Anlagekante 21 hin abfallend geneigt oder um den im Bereich der Stoßstelle 16 zwischen dem Tisch I und dem Streifen 14 liegenden Rand 13 kippbar, um den Tisch I so auszurichten, dass er zur Anlagekante 21 hin abfallend geneigt ist. Beispielsweise ist der mit den Haken 12 bestückte Rand 11 des Tisches I höher oder anhebbar, so dass der Tisch I in Richtung auf den Streifen 14 hin abfällt. Eine auf dem durch Kippen schräggestellten oder von vornherein geneigten Tisch I liegende Glastafel gleitet auf dem Tisch I, z.B. auf einem Luftkissen, nach "unten", bis sie an der durch ein Trum 22 eines Förderbandes 20 gebildete Anlagekante 21 anliegt. Diese Anlagekante 21, die durch das Förderband 20 gebildet wird, bildet eine Referenzlinie und definiert die Lage der Glastafel, bevor sie zur Trennstelle A (Trennvorrichtung für Glas oder Verbundglas) bewegt wird.

Wenn die Auflagefläche des Tisches I zur Anlagekante 21 in der Ausgangs-Lage hin abfallend geneigt ist, ist die Trennvorrichtung A ebenfalls geneigt und schließt mit der Horizontalen den gleichen Winkel ein wie der Tisch I (sie steigt von der Anlagekante 21 weg an).

Für eine sichere Bewegung von Glastafeln auf Tisch I (und den weiteren Tischen II und III) genügen - insbesondere bei Luftkissentischen - kleine Winkel. So kann beispielsweise der Rand 11 des Tisches I bei einer Tischlänge von 3-5 m um etwa 2 cm höher sein als der Rand 13.

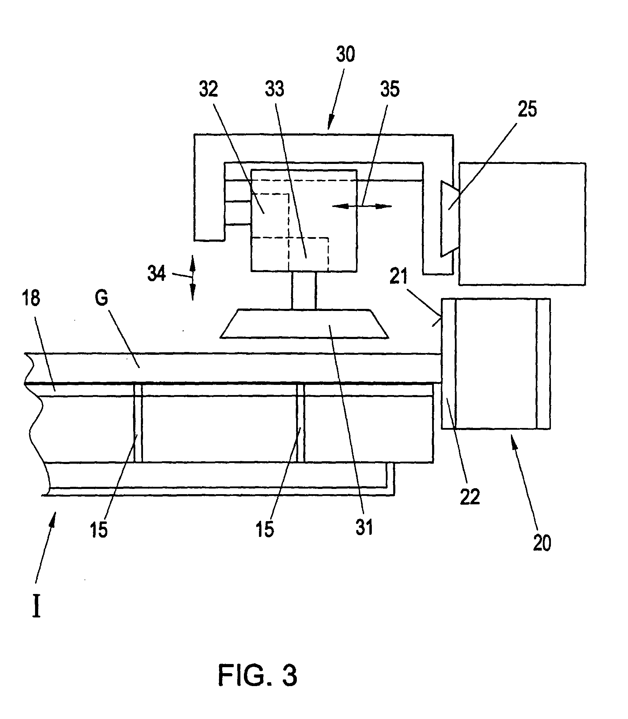

Um die Glastafel G auf dem Tisch I in Richtung auf die Trennstelle A zu bewegen (vgl. Fig. 3), ist auf einer parallel zum Förderband 20 ausgerichteten, gestellfesten Führungsschiene 25 wenigstens ein Schlitten 30 frei verschiebbar geführt, an dem wenigstens ein Sauger 31 angeordnet ist. Der Sauger 31 ist zum Anlegen an die Glastafel G, die auf der beispielsweise von einer Filzlage 18 gebildeten Auflagefläche des Tisches I liegt, durch einen im Schlitten 30 eingebauten Druckmittelmotor 33 absenkbar (Pfeil 34, Fig.3) und kann dann mit Hilfe eines weiteren (Pfeil 35, Fig.3) im Schlitten 30 eingebauten Druckmittelmotors 32 so belastet werden, dass er die Glastafel G gegen das die Anlagekante 21 (Referenzlinie) bildende Trum 22 des Förderbandes 20 zieht, wodurch die Glastafel G durch Kraftschluss mit dem Förderband 20 gekuppelt wird. Durch Bewegen des Förderbandes 20 kann die Glastafel G auf dem Tisch I bewegt werden, wobei die Reibung durch das Luftkissen des Tisches I klein gehalten wird.

Knapp vor der Trennstelle A ist am Tisch I eine Vorrichtung 35 vorgesehen, welche die vordere Kante einer zu bewegenden Glastafel erfasst, um eine Referenzlage zu definieren. Anstelle dieser Vorrichtung kann auch ein einfacher Anschlag vorgesehen sein, der nach dem Festlegen der Referenzlage wegbewegt, z.B. abgesenkt, wird.

Durch Bewegen des Förderbandes 20, mit dem die Glastafel über den Schlitten 30 mit Sauger 31 gekuppelt ist (ein gesonderter Antrieb für den Schlitten 30 kann zwar vorgesehen sein, ist aber in der Regel entbehrlich), wird die Glastafel schrittweise zur Trennstelle A bewegt und es werden in der Glastafel die X-Schnitte (Traveren) ausgeführt. Das Ausmaß des Vorschubes der Glastafel G zur Trennstelle A wird mit einem mit dem Förderband 20, insbesondere mit dessen Antrieb, gekuppelten Weggeber (Inkrementalgeber) erfasst und aufgrund der so erfassten Wege der Glastafel diese gegenüber der Trennstelle A so ausgerichtet, dass sie an der gewünschten Stelle geteilt wird. Bevor mit dem Verschieben der Glastafel G begonnen wird, wird der Tisch I in seine zur Ausrichtung der Trennstelle A parallele Lage bewegt (gekippt).

Die so erhaltenen Glasstreifen (Glas-Zuschnitte) gelangen auf den Tisch II. Dieser Tisch II ist in seiner Grund-Stellung, die er beim Ausführen von Trennvorgängen in der Trennstelle A einnimmt in einer Ebene mit dem Tisch I ausgerichtet, d.h. er ist zur Horizontalen um den selben Winkel geneigt wie der Tisch I und die Trennvorrichtung der Trennstelle A, wobei er zu seiner Anlagekante 44 hin abfällt. Diese Ausrichtung des Tisches II kann auch durch Anheben im Bereich seines der Trennstelle A benachbarten Randes 40 herbeigeführt werden.

Zum Fördern eines Glastafel-Zuschnittes von der Trennstelle A weg ist der Tisch II nach jedem in der Trennstelle A ausgeführten Trennvorgang so schrägstellbar, dass ein Glastafel-Zuschnitt auf dem Tisch II, der jetzt auch von der Trennstelle A bzw. seinem Rand 40 weg abfallend ausgerichtet ist, aus der zunächst unmittelbar rechts neben der Trennstelle A angeordneten Lage in die in der Zeichnung strichliert gezeigte Lage gleitet. Hiezu wird der Tisch II im Bereich der neben der Trennstelle A liegenden Kante 40 gehoben.

Zusätzlich kann der Tisch II auch im Bereich seiner Kante 41 angehoben werden, so dass ein Glastafel-Zuschnitt auf dem Tisch II sicher in Anlage an beiden Anlagekanten 44,45, die beide Trume von Förderbändern 20 sind, gleitet. So wird die eine Ecke des Glastafel-Zuschnittes in einem Referenzpunkt 43, im Beispiel dem Schnittpunkt der beiden Anlagekanten 44,45, angeordnet. Zu diesem Zeitpunkt ist die den Referenzpunkt 43 bildende Ecke der tiefste Punkt des Tisches II, da (im Ergebnis) die Ecke 46 des Tisches II angehoben worden ist.

Durch einen Endschalter 47 wird festgestellt, dass ein Glastafel-Zuschnitt an der Referenzkante 45 anliegt. Sobald das festgestellt ist, wird die der Trennstelle A benachbarte Kante 40 und auch die hiezu normal stehende Kante 41 des Tisches II abgesenkt, so dass der Tisch II wieder mit dem Tisch I fluchtend (in einer Ebene liegend) ausgerichtet ist.

Im gezeigten Ausführungsbeispiel sind an beiden Anlagekanten 44,45, des Tisches II Förderbänder 20 vorgesehen, denen Sauger 31 auf Schlitten 30 (vgl. Fig. 3) zugeordnet sind, wie sie zuvor für den Tisch I beschrieben worden sind. Wesentlich ist dabei der Sauger 31 an der zur Trennstelle A parallelen, dieser gegenüberliegenden (entfernten) und zur Trennstelle B normal stehenden Anlagekante 45 des Tisches II, da über diesen Schlitten 30 mit wenigstens einem Sauger 31 und dem zugeordneten Förderband 20 eine Glastafel/ein Glastafel-Zuschnitt schrittweise zur Trennstelle B (zweite Trennvorrichtung) transportiert wird, um die Trennvorgänge in Y-Richtung auszuführen. Auch vor der Trennstelle B kann ein Sensor 35 zum Erfassen der vorderen Kante eines Glastafel-Zuschnittes vorgesehen sein.

Das Förderband 20 an der zur Trennstelle A senkrechten Anlagekante 44 des Tisches II hat im wesentlichen die Aufgabe, die Bewegung eines Glastafel-Zuschnittes in den Referenzpunkt 43 zu unterstützen, insbesondere wenn sich ein Glastafel-Zuschnitt schrägstellen, und mit einer oder zwei Ecken an einem oder beiden die Anlagekanten 44,45 bildenden Förderbändern 20 anliegen sollte. Der in dem Ausführungsbeispiel von Fig. 1 an der Anlagekante 41 vorgesehene Schlitten 30 mit Sauger 31 ist nicht unbedingt erforderlich und wird in der Regel nicht vorgesehen sein.

Der nach der Trennstelle B angeordnete Tisch III, fluchtet mit dem Tisch II und ist zunächst von der Schneidstelle B weg ansteigend schräg gestellt. Wesentlich ist, dass die Tische II und III in einer (einzigen) (beispielsweise schrägen) Ebene liegen. Um den Abtransport der nach dem Teilen durch die Trennstelle B erhaltenen Glastafel-Zuschnitte zu erleichtern, kann der Tisch III nach dem Ausführen eines Trennvorganges im Bereich seiner Kante 50 abgesenkt werden. In dem Tisch III können auch Hebeleisten 55 zum Hochkippen von Glastafel-Zuschnitten eingelassen sein.

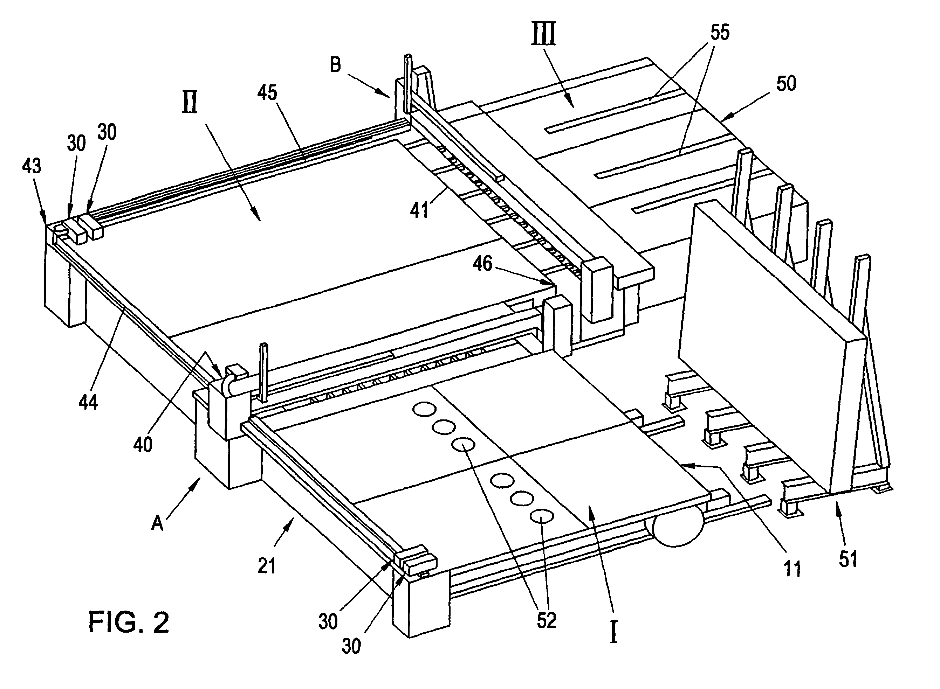

Im in Fig. 1 gezeigten Ausführungsbeispiel ist an jeder der Anlagekanten 21 und 45 je Schlitten 30 mit wenigstens einem Sauger 31 (an den Schlitten 30 können auch je zwei Sauger 31 vorgesehen sein) vorgesehen. Es ist darauf hinzuweisen, dass dies ein Minimalerfordernis ist, da an der Anlagekante 21 und/oder der Anlagekante 45 auch zwei oder mehr Schlitten 30 mit je wenigstens einem Sauger 31 vorgesehen sein können, um große und/oder schwere Glastafeln sicher zu bewegen (vgl. Fig. 2). Meist genügt aber ein Schlitten 30 je Anlagekante, insbesondere wenn dieser im Mittelbereich der Glastafel angreift und diese mit hinreichend großer Kraft gegen das die Anlagekante 21, 44, 45 (Referenzlinie) bildende Trum 22 des jeweiligen Förderbandes 20 zieht. Wenn beispielsweise zwei Schlitten 30 (Fig. 2) mit je wenigstens einem Sauger 31 an den Anlagekanten 21 und 45 vorgesehen sind, können diese auch abwechselnd an Glastafeln bzw. an Glastafel-Zuschnitten angreifen.

Um die Schlitten 30 in ihre Ausgangslage zurückzubewegen, wird das jeweilige Förderband 20 umgesteuert, d.h. es läuft in die entgegengesetzte Richtung und der Schlitten 30 wird über einen Mitnehmer mit dem Förderband 20 gekuppelt, indem der Mitnehmer gegen das Förderband 20 gedrückt wird.

Das Bewegen der Tische, insbesondere der Tische II und III erfolgt bevorzugt durch Bewegen ihrer Rahmen, die unterhalb ihrer Auflageflächen angeordnet sind, indem an den Rahmen am Boden abgestützte Druckmittelzylinder angreifen.

Der Arbeitsablauf der (Verbund-)Glasschneideanlage mit den schrägstellbaren oder in ihrer Ausgangslage schräggestellten Tischen kann beispielhaft und mit Bezug auf die Fig. 2 wie folgt beschrieben werden:
1. Tisch I wird um seinen Rand 11 hochgeklappt, um eine Glastafel aus einem Stapel 51 von Glastafeln zu übernehmen. Die Glastafel wird am Tisch I über mehrere Sauger 52 festgelegt.
2. Der Tisch I wird in die zur Anlagekante 21 hin abfallende Ausgangs-Lage zurückgeklappt. Die Glastafel gleitet dann auf dem Luftkissen zur Anlagekante 21 hin.
3. In dieser Position wird die Glastafel durch den Sauger 31 am Schlitten 30 (oder durch Sauger an zwei Schlitten) kraftschlüssig mit dem Förderband 20 gekuppelt.
4. Durch Betätigen des Förderbandes 20 wird die Glastafel vorgeschoben bis sie relativ zur Trennvorrichtung A für einen Trennvorgang richtig ausgerichtet ist.
5. Dann wird bei miteinander fluchtenden Tischen I und II (beide sind zur Anlagekante 21 bzw. 44 hin abfallend geneigt) durch die Trennvorrichtung der Trennstelle A ein Glastafel-Zuschnitt abgetrennt. Der so erhaltene Glastafel-Zuschnitt ("Travere") liegt auf dem Tisch II.
6. Tisch II wird im Bereich seiner der Trennstelle A benachbarten Kante 40 angehoben, so dass er auch auf die Anlagekante 45 hin schräg abfällt.
7. Der Glastafel-Zuschnitt bewegt sich (gleitet) auf dem Tisch II in eine Position, in der er an der Anlagekante 45 und an der Anlagekante 44 anliegt.
8. Durch Anheben des Tisches II auch im Bereich seiner der Trennstelle B benachbarten Kante 41 wird der Tisch II so schräggestellt, dass seine Ecke zwischen den Anlagekanten 44, 45 der tiefste Punkt ist. Dadurch wird sichergestellt, dass der Glastafel-Zuschnitt mit seiner Ecke im Referenzpunkt 43 angeordnet ist, und mit zwei zu einer seiner Ecken hin verlaufenden Rändern an den Anlagekanten 44, 45 anliegt.
9. Beim Bewegen eines Glastafel-Zuschnittes auf dem Tisch II wird das Förderband 20 betätigt, um diese Bewegung zu unterstützen, insbesondere bei schräggestelltem Glastafel-Zuschnitt.
10. Durch den Sauger 31 am Schlitten 30 im Bereich der Anlagekante 45 wird der Glastafel-Zuschnitt am Förderband 20 im Bereich der Anlagekante 45 kraftschlüssig festgelegt, während er sich mit seiner Ecke im Referenzpunkt 43 befindet.
11. Der Tisch II wird in seine mit Tisch I fluchtende nur zur Anlagekante 44 hin abfallende Ausgangs-Lage zurückbewegt. Der Tisch II steigt in dieser Lage von der Anlagekante 44 zum Rand 41 hin also zur Trennstelle B hin an.
12. Durch Betätigen des Förderbandes 20 wird der Glastafel-Zuschnitt zur Trennstelle B vorgeschoben.
13. Durch die Trennvorrichtung in der Trennstelle B wird der Glastafel-Zuschnitt weiter in Zuschnitte geteilt.
14. Während dieses Trennvorganges sind die Tische II und III in einer Ebene von der Anlagekante 44 des Tisches II zur Kante 50 des Tisches III hin ansteigend ausgerichtet.
15. Zum Abtransport von nach der Trennstelle B anfallenden Zuschnitten kann der Tisch III so geneigt werden , dass er von der Trennstelle B zum Rand 50 hin abfallend ausgerichtet ist. Mit Hilfe von Hebeleisten 55 können Glastafel-Zuschnitte vom Tisch III abgehoben und im wesentlichen lotrecht aufgerichtet werden.

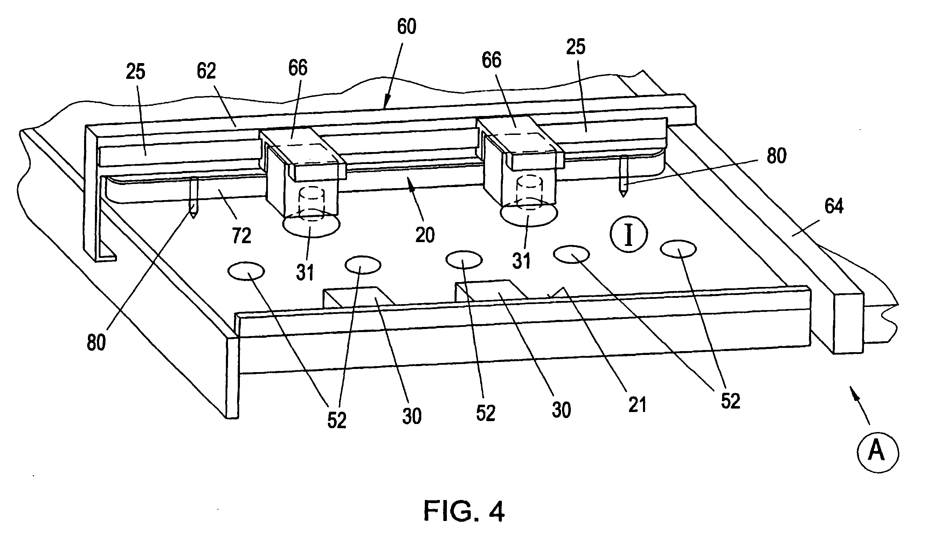

Bei der in Fig. 4 gezeigten Ausführungsform ist im Bereich der Auflagefläche des Tisches I eine weitere Fördervorrichtung 60 vorgesehen. Diese weitere Fördervorrichtung 60 kann dazu benutzt werden, um in Kombination mit der Fördervorrichtung mit dem Förderband 20 und dem Sauger 30 an der Anlagekante 21 eine Glastafel zur ersten Trennstelle A hinzubewegen. Die zweite Fördereinrichtung 60 kann aber auch dazu herangezogen werden, gleichzeitig oder unabhängig vom Transportieren einer Glastafel durch die Fördervorrichtung 20 mit Sauger 30 eine weitere Glastafel zur Trennstelle A hinzubewegen.

Im einzelnen ist die zweite Fördereinrichtung 60 im Bereich über der Auflagefläche des Tisches I wie folgt aufgebaut: An einem am Tisch I ortsfest montierten Balken 62 ist ein endlos umlaufendes Förderband 20 z.B. in Form eines Zahnriemens, mit Abstand über der Auflagefläche des Tisches I vorgesehen, dessen Anlagefläche 21 zur Auflagefläche I im wesentlichen normal ausgerichtet ist. Oberhalb des Förderbandes 20 ist an dem Balken 62, der einerseits am Tisch I und anderseits am Balken 64 der Trennstelle A montiert sein kann, eine Führungsschiene 25 für (wenigstens) einen Schlitten 66 vorgesehen. Dieser Schlitten 66 trägt wenigstens einen Sauger 31, der auf eine auf der Auflagefläche des Tisches I liegende Glastafel G abgesenkt (Pfeil 34) werden kann. Dabei ist die Anordnung des Förderbandes 20 so getroffen, dass dieses von der Auflagefläche des Tisches I einen Abstand aufweist, der so groß ist, dass auch die dickste Glastafel G unter ihm hindurchbewegt werden kann.

Um den Schlitten 66 mit dem Sauger 31 mit dem Förderband 20 zu kuppeln, ist an dem Schlitten 66 ein Druckmittelmotor 68 vorgesehen, der einen Stempel 70 gegen das Trum 72 des Förderbandes 20 drückt, das dem Schlitten 66 benachbart ist, so dass der Schlitten mit dem Förderband bewegt und damit auch eine Glastafel G, an die der Sauger 31 des Schlittens 66 angelegt worden ist, mitgezogen wird.

Um eine Glastafel G parallel zur Bewegungsrichtung des Förderbandes 20 auszurichten, können absenkbare Anschläge 80, z.B. Anlagestifte, vorgesehen sein, die eine "Null-Linie" (Referenz-Linie) definieren und gegen welche die Glastafel G in Anlage gebracht wird.

Es versteht sich, dass anstelle des einen Schlittens 66 mit wenigstens einem Sauger 31 auch zwei oder mehrere Schlitten 66 jeweils mit wenigstens einem Sauger 31 vorgesehen sein können, um den sicheren Transport von Glastafeln G durch die zusätzliche Fördervorrichtung 60 im Bereich der Auflagefläche des Tisches I zu ermöglichen.

In einer abgeänderten Ausführungsform kann die Fördervorrichtung 60 statt ortsfest verstellbar sein, so dass ihr Abstand von der vom Förderband 20 gebildeten Anlagekante 21 verändert werden kann.

Zusammenfassend kann ein Ausführungsbeispiel der Erfindung wie folgt beschrieben werden:

Bei einer Anlage zum Zerteilen von Glastafeln in Glastafel-Zuschnitte ist wenigstens eine Trennstelle A, B vorgesehen. Um eine zu teilende Glastafel oder einen Glastafel-Zuschnitt in eine definierte Lage auszurichten sind am Rand der Tische I und II Anlagekanten 21, 44, 45 vorgesehen. Um Glastafeln und Glastafel-Zuschnitte in Anlage an die Anlagekanten 21, 44, 45 zu bewegen sind die Tische I, II zu den Anlagekanten 21, 44, 45 hin abfallend ausgerichtet, so dass die Glastafeln und Glastafel-Zuschnitte auf zwischen den Glastafeln bzw. Glastafel-Zuschnitten und den Tischen I, II erzeugten Luftkissen in Anlage an die Anlagekanten 21, 44, 45 gleiten. An den Anlagekanten 21, 45 anliegende Glastafeln bzw. Glastafel-Zuschnitte werden mit im Bereich der Anlagekanten 21, 45 vorgesehenen Förderbändern 20 kraftschlüssig gekuppelt und dann zur nach dem Tisch I, II angeordneten Trennstelle A, B bewegt. Wenn zwei Trennstellen A, B vorgesehen sind, ist der Tisch II zwischen den beiden Trennstellen A, B so schrägstellbar, dass ein als Referenzpunkt 43 dienender Schnittpunkt zwischen zwei Anlagekanten 44, 45 der tiefste Punkt des Tisches II ist.

## Patentansprüche

1. Verfahren zum Bewegen und Positionieren von Glastafeln (G) und Glastafel-Zuschnitten beim Teilen von Glastafeln (G) auf einer Vorrichtung zum Teilen von Glastafeln (G) mit wenigstens einer Trennstelle (A, B) und mit beidseits der Trennstelle (A, B) angeordneten Auflageflächen (I, II, III) für die zu teilende Glastafel (G) und für nach dem Teilen derselben erhaltene Glastafel-Zuschnitte, **dadurch gekennzeichnet, dass** eine Glastafel (G) bzw. ein Glastafel-Zuschnitt auf einer Auflagefläche (I, II), die zur Horizontalen in Richtung auf eine Anlagekante (21, 45) abfallend geneigt ist, bis in eine durch die Anlagekante (21,45) definierte Stellung gleiten gelassen wird, dass die Glastafel (G) mit ihrem an der Anlagekante (21, 45) anliegenden Rand kraftschlüssig mit einer Fördereinrichtung (20) gekuppelt und in einer zur Wirkrichtung der Trennstelle (A, B) normalen Richtung zur Trennstelle (A, B) hin bewegt wird.

2. Verfahren nach Anspruch 1, **dadurch gekennzeichnet, dass** die Glastafel (G) auf einem zwischen ihr und der Auflagefläche (I, II) gebildeten Luftkissen gleitet.

3. Verfahren nach Anspruch 1 oder 2, **dadurch gekennzeichnet, dass** die wenigstens eine Auflagefläche (I, II) zum Bewegen der Glastafel (G) in eine durch eine Anlagekante (21, 45) definierte Lage zu dieser Anlagekante (21, 45) hin abfallend ausgerichtet ist oder ausgerichtet wird.

4. Verfahren nach einem der Ansprüche 1 bis 3, **dadurch gekennzeichnet, dass** die vor der ersten Trennstelle (A) angeordnete Auflagefläche (I) zur vor der Trennstelle (A) angeordneten Anlagekante (21) hin abfallend ausgerichtet ist oder ausgerichtet wird.

5. Verfahren nach einem der Ansprüche 1 bis 4, **dadurch gekennzeichnet, dass** die zwischen den Trennstellen (A,B) angeordnete Auflagefläche (II) zur vor der Trennstelle (B) angeordneten Anlagekante (44, 45) hin abfallend ausgerichtet ist oder ausgerichtet wird.

6. Verfahren nach einem der Ansprüche 1 bis 5 , **dadurch gekennzeichnet, dass** die Anlagekante (21, 45) im wesentlichen normal zur Wirkrichtung der nachgeordneten Trennstelle (A, B) ausgerichtet ist.

7. Verfahren nach einem der Ansprüche 1 bis 6, **dadurch gekennzeichnet, dass** die Glastafel (G) schrittweise zur Trennstelle (A, B) bewegt und nach jedem Vorschubschritt ein Trennvorgang ausgeführt wird.

8. Verfahren nach einem der Ansprüche 1 bis 7, **dadurch gekennzeichnet, dass** zwei Trennstellen (A, B) mit zueinander senkrecht stehenden Wirkrichtungen vorgesehen sind und dass die Auflagefläche (II) zwischen den beiden Trennstellen (A, B) schräg ausgerichtet wird, um einen durch Trennen der Glastafel (G) in der Trennstelle (A) erhaltenen Glastafel-Zuschnitt in eine definierte Lage (Referenzlage) gleiten zu lassen.

9. Verfahren nach Anspruch 8, **dadurch gekennzeichnet, dass** die Referenzlage durch Anliegen des Glastafelzuschnitts an zwei zueinander senkrecht stehenden Anlagekanten (44, 45) definiert wird.

10. Verfahren nach Anspruch 9, **dadurch gekennzeichnet, dass** die Ecke des Glastafel-Zuschnitts, die an dem von der ersten Trennstelle entfernt liegenden Rand des Glastafel-Zuschnittes angeordnet ist, im Schnittpunkt (43) der Anlagenkanten (44,45) angeordnet wird.

11. Verfahren nach einem der Ansprüche 8 bis 10, **dadurch gekennzeichnet, dass** die zweite Auflagefläche (II) zunächst im Bereich ihres der ersten Trennstelle (A) benachbarten Randes (40) und dann zusätzlich an einem zu diesen Rand (40) senkrecht stehenden, der zweiten Trennstelle (B) benachbarten Rand (41) angehoben wird, so dass sie schlussendlich zum Schnittpunkt (43) der Anlagekanten (44, 45) hin schräg abfallend angeordnet ist.

12. Verfahren nach einem der Ansprüche 1 bis 11, **dadurch gekennzeichnet, dass** die vor der ersten Trennstelle (A) angeordnete Auflagefläche (I) vor dem Fördern einer Glastafel zur Trennstelle hin in eine zur Wirkrichtung der Trennstelle (A) parallele Lage gebracht wird.

13. Verfahren nach Anspruch 12, **dadurch gekennzeichnet, dass** die Auflagefläche (I) in eine mit der Horizontalen einen Winkel einschließende Lage gebracht wird.

14. Verfahren nach einem der Ansprüche 1 bis 13, **dadurch gekennzeichnet, dass** vor dem Bewegen eines Glastafel-Zuschnittes auf der zwischen den Trennstellen (A, B) angeordneten Auflagefläche (II) in Richtung auf die zweite Trennstelle (B) hin diese Auflagefläche im Bereich ihres der ersten Trennstelle (A) benachbarten Randes (40) abgesenkt wird.

15. Verfahren nach einem der Ansprüche 1 bis 14, **dadurch gekennzeichnet, dass** beim Ausführen der Trennvorgänge in der zweiten Trennstelle (B), die im Anschluss an die zweite Trennstelle (B) angeordnete Auflagefläche (III) mit der vor der zweiten Trennstelle (B) angeordneten Auflagefläche (II) in eine Ebene ausgerichtet ist oder ausgerichtet wird.

16. Verfahren nach Anspruch 15, **dadurch gekennzeichnet, dass** die Auflageflächen (II) und (III) in eine mit der Horizontalen einen Winkel einschließende Lage ausgerichtet werden.

17. Verfahren nach Anspruch 15 oder 16, **dadurch gekennzeichnet, dass** zum Abtransportieren von Glastafel-Zuschnitten von der nach der zweiten Trennstelle (B) angeordneten Auflagefläche (III) diese von der Trennstelle (B) weg abfallend ausgerichtet wird.

18. Verfahren nach einem der Ansprüche 1 bis 17, **dadurch gekennzeichnet, dass** zwischen der Auflagefläche (I, II, III) und einer Glastafel (G) und einem Glastafel-Zuschnitt ein Luftkissen ausgebildet wird.

19. Vorrichtung zum Durchführen des Verfahrens nach einem der Ansprüche 1 bis 18 mit wenigstens einer Trennvorrichtung (A, B), mit wenigstens einer als Tisch ausgebildeten Auflagefläche (I, II, III) und mit wenigstens einer Einrichtung zum Fördern von Glastafeln (G) auf dem Tisch (I, II, III), **dadurch gekennzeichnet, dass** der wenigstens eine Tisch (I, II) in Richtung auf eine Anlagekante (21, 44, 45) hin abfallend ausrichtbar ist oder ausgerichtet ist, dass die Anlagekante (21, 44, 45) von einem Trum (22) eines Endlos-Förderbandes (20) gebildet wird, das im Bereich der Anlagekante (21, 45) für Glastafeln (G) bzw. Glastafel-Zuschnitte vorgesehen ist, und dass eine Vorrichtung (30, 31) zum kraftschlüssigen Kuppeln einer Gla-stafel (G) bzw. eines Glastafel-Zuschnittes mit dem Trum des Förderbandes (20) vorgesehen ist.

20. Vorrichtung nach Anspruch 19, **dadurch gekennzeichnet, dass** der Tisch (I, II) durch Anheben im Bereich seines der Anlagekante (21, 44, 45) gegenüberliegenden Randes (11, 40, 41) abfallend ausrichtbar ist.

21. Vorrichtung nach Anspruch 19 oder 20, **dadurch gekennzeichnet, dass** die mit der Fördereinrichtung (20) ausgestattete Anlagekante (21, 45) zur dem Tisch (I, II) benachbarten Trennvorrichtung (A, B) normal ausgerichtet ist.

22. Vorrichtung nach einem der Ansprüche 19 bis 21, **dadurch gekennzeichnet, dass** die Vorrichtung zum kraftschlüssigen Kuppeln wenigstens einen an der nach oben weisenden Fläche der Glastafel (G) bzw. des Glastafel-Zuschnittes angreifenden Mitnehmer (31) aufweist, mit dem die Glastafel (G) bzw. der Glastafel-Zuschnitt gegen das die Anlagekante (21, 45) bildende Trum (22) des Förderbandes (20) belastbar ist.

23. Vorrichtung nach Anspruch 22, **dadurch gekennzeichnet, dass** der Mitnehmer wenigstens ein Sauger (31) ist.

24. Vorrichtung nach Anspruch 22 oder 23, **dadurch gekennzeichnet, dass** der Mitnehmer (31) über einen Schlitten (30) auf einer zum Förderband (20) parallel ausgerichteten Führungsschiene (25) geführt ist.

25. Vorrichtung nach Anspruch 24, **dadurch gekennzeichnet, dass** der wenigstens eine Sauger (31) im Schlitten (30) durch Druckmittelmotore (32, 33) heb- und senkbar und horizontal verstellbar montiert ist.

26. Vorrichtung nach einem der Ansprüche 19 bis 25, **dadurch gekennzeichnet, dass** der vor der ersten Trennvorrichtung (A) angeordnete Tisch (I) zum Umlegen von Glastafeln (G) in eine im wesentlichen lotrechte Lage aufrichtbar und dann wieder umlegbar ist.

27. Vorrichtung nach einem der Ansprüche 19 bis 26, **dadurch ge-kennzeichnet, dass** der zwischen den beiden Trennvorrichtungen (A, B) angeordnete Tisch (II) mit zwei Anlagekanten (44, 45) ausgebildet ist, wobei diese Anlagekanten (44, 45) jeweils einer der Trennvorrichtungen (A, B) gegenüber liegen.

28. Vorrichtung nach einem der Ansprüche 19 bis 27, **dadurch gekennzeichnet, dass** die Auflagefläche der Tische (I, II, III) mit Rollen bestückt ist.

29. Vorrichtung nach einem der Ansprüche 19 bis 28, **dadurch gekennzeichnet, dass** in der Auflagefläche der Tische (I, II, III) Bohrungen (15) münden, die mit Druckluft beaufschlagbar sind.

30. Vorrichtung nach Anspruch 29, **dadurch gekennzeichnet, dass** die Auflagefläche der Tische (I, II, III) durch eine Filzauflage (18) gebildet ist.

31. Vorrichtung nach einem der Ansprüche 19 bis 30, **dadurch gekennzeichnet, dass** die erste Trennvorrichtung (A) mit der Horizontalen einen Winkel einschließt und dass die dieser Trennvorrichtung (A) benachbarten Tische (I, II) miteinander fluchtend und in ihrer Ausgangs-Lage zur Horizontalen den gleichen Winkel einschließen wie die Trennvorrichtung (A).

32. Vorrichtung nach einem der Ansprüche 19 bis 31, **dadurch gekennzeichnet, dass** die der zweiten Trennvorrichtung (B) benachbarten Tische (II, III) in ihrer Ausgangs-Lage miteinander fluchten und zur Horizontalen den gleichen Winkel einschließen wie die erste Trennvorrichtung (A).

33. Vorrichtung nach einem der Ansprüche 19 bis 32, **dadurch gekennzeichnet, dass** im Bereich des ersten Tisches (I) eine Fördervorrichtung (60) vorgesehen ist, die zur Fördervorrichtung (20,30) am Rand des Tisches (I) parallel und normal zur ersten Trennstelle (A) ausgerichtet ist.

34. Vorrichtung nach Anspruch 33, **dadurch gekennzeichnet, dass** die Fördereinrichtung (60) einen Endlosriemen (20) aufweist, der im Abstand von der Auflagefläche des Tisches (I) angeordnet ist und wenigstens einen Schlitten (66) mit einer Einrichtung (31) zum Kuppeln des Schlittens (66) mit einer auf dem Tisch (I) liegenden Glastafel (G) vorgesehen ist.

35. Vorrichtung nach Anspruch 34, **dadurch gekennzeichnet, dass** die Einrichtung zum Kuppeln des Schlittens (66) mit der Glastafel (G) wenigstens ein Sauger (31) ist.

36. Vorrichtung nach Anspruch 34 oder 35, **dadurch gekennzeichnet, dass** der Schlitten (66) mit dem Transportriemen (20) kuppelbar ist.

37. Vorrichtung nach Anspruch 36, **dadurch gekennzeichnet, dass** zum Kuppeln des Schlittens (66) mit dem Transportriemen (20) am Schlitten (66) ein gegen den Transportriemen (20) anlegbarer Stempel vorgesehen ist.

38. Vorrichtung nach einem der Ansprüche 33 bis 37, **dadurch gekennzeichnet, dass** an der Fördervorrichtung (60) wenigstens ein Anschlag (80) zum Ausrichten eines Randes einer zu transportierenden Glastafel (G) vorgesehen ist, wobei die Glastafel (G) durch Anlegen an diesen Anschlag (80) ausgerichtet wird.

39. Vorrichtung nach Anspruch 38, **dadurch gekennzeichnet, dass** die Anschlagvorrichtung wenigstens zwei absenkbare Stifte (80) aufweist.

40. Vorrichtung nach einem der Ansprüche 33 bis 39, **dadurch gekennzeichnet, dass** die Fördervorrichtung (60) einen Balken (62) umfasst, der einerseits am Maschinengestell und anderseits am Balken (64) der ersten Trennvorrichtung (A) montiert ist.

## Claims

1. Process for moving and positioning glass sheets (G) and glass sheet shapes when cutting glass sheets (G) on a device for cutting of glass sheets (G) with at least one cutting site (A,B) and with support surfaces (I,II,III) which are disposed on either side of the cutting site (A,B) for the glass sheet (G) which is to be cut and for the glass sheet shape which has been obtained after the sheet is cut, **characterised in that** a glass sheet (G) or a glass sheet shape on a support surface (I,II), which is inclined descending to the horizontal in direction to a contact edge (21,45), is let to be glided into a position defined by the contact edge (21,45), that the glass sheet (G) is coupled by force-fit to a conveyor means (20) with its edge adjacent to the contact edge (21, 45), and is moved towards the cutting site (A,B) in a direction which is normal to the direction of action of the cutting site (A,B).

2. Process according to claim 1, **characterised in that** the glass sheet (G) glides on an air cushion formed between itself and the support face (I,II).

3. Process according to claim 1 or 2, **characterised in that** the at least one support surface (I,II) for moving the glass sheet (G) is or gets aligned in a position, which is defined by a contact edge (21,45), descending to said contact edge (21,45).

4. Process according to one of claims 1 to 3, **characterised in that** the support surface (I), disposed before the first cutting site (A), is or gets aligned descending to the contact edge (21), disposed before the cutting site (A).

5. Process according to one of claims 1 to 4, **characterised in that** the support surface (II), disposed between the cutting sites (A,B), is or gets aligned descending to the contact edge (44,45), disposed before the cutting site (B).

6. Process according to one of claims 1 to 5, **characterised in that** the contact edge (21,45) is aligned essentially normal to the direction of action of the cutting site (A,B) coordinated.

7. Process according to one of claims 1 to 6, **characterised in that** the glass sheet (G) is moved gradually to the cutting site (A,B) and a cutting process is executed after each advance step.

8. Process according to one of claims 1 to 7, **characterised in that** two cutting sites (A,B) with directions of action, which are perpendicular to one another, are provided and that the support surface (II) between both of the cutting sites (A,B) gets aligned inclined, to let a glass sheet shape, obtained by cutting the glass sheet (G) in the cutting site (A), glide in a defined position (reference position).

9. Process according to claim 8, **characterised in that** the reference position is defined by abutting of the glass sheet shape at two contact edges (44,45), which are perpendicular to each other.

10. Process according to claim 9, **characterised in that** the corner of the glass sheet shape, which is disposed at the edge of the glass sheet shape distant to the first cutting site (A), is disposed in the intersection point (43) of the contact edges (44,45).

11. Process according to one of claims 8 to 10, **characterised in that** the second support surface (II) gets raised, at first in the area of its edge (40), adjacent to the first cutting site (A), and then additionally at a edge (41), perpendicular to said edge (40) and adjacent to the second cutting site (B), such that finally it is disposed descending to the intersection point (43) of the contact edges (44,45).

12. Process according to one of claims 1 to 11, **characterised in that** the support surface (I), disposed before the first cutting site (A), is brought in a position, which is parallel to the direction of action of the cutting site (A), before conveying a glass sheet (G) towards the cutting site.

13. Process according to claim 12, **characterised in that** the support surface (I) is brought in a position, which encloses an angle with the horizontal.

14. Process according to one of claims 1 to 13, **characterised in that** before moving a glass sheet shape on the support surface (II), which is disposed between the cutting sites (A,B), in direction towards the second cutting site (B), said support surface gets lowered in the area of its edge (40), adjacent to the first cutting site (A).

15. Process according to one of claims 1 to 14, **characterised in that** at executing the cutting processes in the second cutting site (B), the support surface (III), disposed following up to the second cutting site (B), is or gets aligned on the plain with the support surface (II), disposed before the second cutting site (B).

16. Process according to claim 15, **characterised in that** the support surfaces (II) and (III) get aligned in a position, which encloses an angle with the horizontal.

17. Process according to claim 15 or 16, **characterised in that** for the terminal transport of the glass sheet shapes from the support surface (III), which is disposed after the second cutting site (B), said support surface is aligned descending away from the cutting site (B).

18. Process according to one of claims 1 to 17, **characterised in that** an air cushion is formed between the support surface (I,II,III) and a glass sheet (G) and a glass sheet shape.

19. Device for executing the process according to one of the claims 1 to 18 with at least one cutting device (A,B), with at least one support surface (I,II,III) which is made as a table, and with at least one means for conveying glass sheets (G) on the table (I,II,III), **characterised in that** the at least one table (I,II) is alignable or aligned descending in direction towards a contact edge (21,44,45), that the contact edge (21,44,45) is formed by a strand (22) of an continuos conveyer belt (20), provided in the area of the contact edge (21,45) for glass sheets (G) or glass sheet shapes, and that a device (30,31) for force-fitted coupling of a glass sheet (G) or a glass sheet shape to the strand of the conveyor belt (20) is provided.

20. Device according to claim 19, **characterised in that** the table (I,II) is alignable descending by raising in the area of its edge (11,40,41), which is located opposite to the contact edge (21,44,45).

21. Device according to claim 19 or 20, **characterised in that** the contact edge (21,45), which is equipped with the conveyor means (20), is aligned normally to the cutting device (A,B), which is adjacent to the table (I,II).

22. Device according to one of the claims 19 to 21, **characterised in that** the device has at least one driver (31) for force-fitted coupling, which engages the surface of the glass sheet (G) or the glass sheet shape pointing up, and with which the glass sheet (G) or the glass sheet shape can be loaded against the strand (22) of the conveyor belt (20), which forms the contact edge (21,45).

23. Device according to claim 22, **characterised in that** the driver is at least one suction head (31).

24. Device according to claim 22 or 23, **characterised in that** the driver (31) is,guided via carriage (30) on a guide rail (25), which is aligned parallel to the conveyor belt (20).

25. Device according to claim 24, **characterised in that** the at least one suction head (31) is mounted in the carriage (30), able to be raised and lowered and to be moved horizontally by pressurized motors (32,33).

26. Device according to one of the claims 19 to 25, **characterised in that** the table (I), disposed before the first cutting site (A), for turning over the glass sheets (G) to a essentially vertical position, is able to be raised and then to be turned over again.

27. Device according to one of the claims 19 to 26, **characterised in that** the table (II), disposed between both of the cutting devices (A,B), is formed with to contact edges (44,45), said contact edges (44,45) each lying opposite of one of the cutting devices (A,B), respectively.

28. Device according to one of the claims 19 to 27, **characterised in that** the support surface of the tables (I,II,III) is equipped with rollers.

29. Device according to one of the claims 19 to 28, **characterised in that** holes (15), which can be supplied with compressed air discharge, lead to the support surface of the tables (I,II,III).

30. Device according claim 29, **characterised in that** the support surface of the tables (I,II,III) is formed by a felt support (18).

31. Device according to one of the claims 19 to 30, **characterised in that** the first cutting site (A) encloses an angle with the horizontal and that the tables (I,II), adjacent to said cutting device (A), flush and enclose in their position of origin the same angle to the horizontal, as the first cutting site (A).

32. Device according to one of the claims 19 to 31, **characterised in that** the tables (II,III), adjacent to the second cutting site (B), flush in their position of origin and enclose the same angle to the horizontal, as the first cutting site (A).

33. Device according to one of the claims 19 to 32, **characterised in that** in the area of the first table (I) a conveyor device (60) is provided, which is aligned parallel to the conveyor device (20,30) on the edge of the table (I) and normal to the first cutting site (A).

34. Device according claim 33, **characterised in that** the conveyor means (60) exhibits a continuos belt (20), which is disposed in a distance from the support surface of the table (I), and at least one carriage (66) with means (31) for coupling the carriage (66) to one of the glass sheets (G) laying on the table (I) is provided.

35. Device according claim 34, **characterised in that** the means for coupling the carriage (66) to the glass sheet (G) is at least one suction head (31).

36. Device according claim 34 or 35, **characterised in that** the carriage (66) is able to be coupled to the transport belt (20).

37. Device according claim 36, **characterised in that** for coupling the carriage (66) with the transport belt (20) at the carriage (66) there is a plunger, which is able to be placed against the transport belt (20).

38. Device according to one of the claims 33 to 37, **characterised in that** at the conveyor means (60) at least one stop (80) for aligning one edge of a glass sheet (G), which is to be transported, is provided, said glass sheet (G) being aligned by abutting against said stop (80).

39. Device according claim 38, **characterised in that** the stop device comprises at least two pins (80), which are able to be lowered.

40. Device according to one of the claims 33 to 39, **characterised in that** the conveyor device (60) comprises a beam (62), which is mounted on the one hand at the machine frame and on the other hand at the beam (64) of the first cutting device (A).

## Revendications

1. Procédé pour déplacer et positionner des plaques de verre (G) et des pièces coupées des plaques de verre lors de la division de plaques de verre (G) sur un dispositif destiné à diviser des plaques de verre (G), comprenant au moins un point de séparation (A, B) et des surfaces d'appui (I, II, III) situées des deux côtés du point de séparation (A, B) pour la plaque de verre (G) à diviser et pour les pièces coupées de la plaque de verre, obtenues après la division de celle-ci, **caractérisé en ce qu'**une plaque de verre (G) resp. une pièce coupée de la plaque de verre est laissée glisser sur une surface d'appui (I, II), qui, par rapport à l'horizontale, est inclinée en descendant en direction d'un bord d'applique (21, 45) jusqu'à une position définie par le bord d'applique (21, 45), **en ce que** la plaque de verre (G), avec son bord adjacent au bord d'applique (21, 45), est couplée par adhérence à un dispositif de transport (20) et qu'elle est déplacée vers le point de séparation (A, B) dans une direction normale par rapport à la direction d'action du point de séparation (A, B).

2. Procédé selon la revendication 1, **caractérisé en ce que** la plaque de verre (G) glisse sur un coussin d'air formé entre elle et la surface d'appui (I, II).

3. Procédé selon la revendication 1 ou 2, **caractérisé en ce que** l'au moins une surface d'appui (I, II) pour déplacer la plaque de verre (G) est orientée dans une position définie par un bord d'applique (21, 45) descendant vers ce bord d'applique (21, 45) ou qu'elle est mise dans cette orientation.

4. Procédé selon l'une quelconque des revendications 1 à 3, **caractérisé en ce que** la surface d'appui (I) située devant le premier point de séparation (A) est orientée en descendant vers le bord d'applique (21) situé devant le point de séparation (A) ou qu'elle est mise dans cette orientation.

5. Procédé selon l'une quelconque des revendications 1 à 4, **caractérisé en ce que** la surface d'appui (II) située entre les points de séparation (A, B) est orientée en descendant vers le bord d'applique (44, 45) situé devant le point de séparation (B) ou qu'elle est mise dans cette orientation.

6. Procédé selon l'une quelconque des revendications 1 à 5, **caractérisé en ce que** le bord d'applique (21, 45) est essentiellement orienté normalement par rapport à la direction d'action du point de séparation (A, B) situé en aval.

7. Procédé selon l'une quelconque des revendications 1 à 6, **caractérisé en ce que** la plaque de verre (G) est déplacée en étapes vers le point de séparation (A, B) et **en ce qu'**une opération de séparation est exécutée après chaque étape d'avancement.

8. Procédé selon l'une quelconque des revendications 1 à 7, **caractérisé en ce que** deux points de séparation (A, B) ayant des directions d'action perpendiculaires l'une par rapport à l'autre sont prévus et **en ce que** la surface d'appui (II) entre les deux points de séparation (A, B) est orientée en biais afin de faire glisser une pièce coupée de la plaque de verre, obtenue par séparation de la plaque de verre (G) dans le point de séparation (A), dans une position définie (position de référence).

9. Procédé selon la revendication 8, **caractérisé en ce que** la position de référence est définie par application de la pièce coupée de la plaque de verre sur deux bords d'applique (44, 45) perpendiculaires l'un à l'autre.

10. Procédé selon la revendication 9, **caractérisé en ce que** le coin de la pièce coupée de la plaque de verre est situé sur le bord de la pièce coupée de la plaque de verre, situé à distance du premier point de séparation, qu'il est placé au point d'intersection (43) des bords d'applique (44, 45).

11. Procédé selon l'une quelconque des revendications 8 à 10, **caractérisé en ce que** la deuxième surface d'appui (II) est élevée, d'abord dans la partie de son bord (40) voisin au premier point de séparation (A) et ensuite, en plus, sur un bord (41) voisin au deuxième point de séparation (B), perpendiculaire à ce bord (40), de sorte qu'elle est finalement située en descendant en biais par rapport au point d'intersection (43) des bords d'applique (44, 45).

12. Procédé selon l'une quelconque des revendications 1 à 11, **caractérisé en ce que** la surface d'appui (I) située devant le premier point de séparation (A), avant le transport d'une plaque de verre vers le point de séparation, est mise dans une position parallèle à la direction d'action du point de séparation (A).

13. Procédé selon la revendication 12, **caractérisé en ce que** la surface d'appui (I) est mise dans une position incluant un angle avec l'horizontale.

14. Procédé selon l'une quelconque des revendications 1 à 13, **caractérisé en ce qu'**avant le déplacement, en direction du deuxième point de séparation (B), d'une pièce coupée de plaque de verre sur la surface d'appui (II) située entre les points de séparation (A, B), cette surface d'appui est baissée dans la partie de son bord (40) voisin au premier point de séparation (A).

15. Procédé selon l'une quelconque des revendications 1 à 14, **caractérisé en ce que** lors de l'exécution des opérations de séparation dans le deuxième point de séparation (B), la surface d'appui (III) située à la suite du deuxième point de séparation (B) est orientée dans un plan avec la surface d'appui (II) située devant le deuxième point de séparation (B) ou qu'elle est mise dans cette orientation.

16. Procédé selon la revendication 15, **caractérisé en ce que** les surfaces d'appui (II) et (III) sont orientées dans une position incluant un angle avec l'horizontale.

17. Procédé selon la revendication 15 ou 16, **caractérisé en ce que**, pour le transport de pièces coupées des plaques de verre depuis la surface d'appui (III) située après le deuxième point de séparation (B), cette surface d'appui est orientée en étant détournée du point de séparation (B) et en descendant.

18. Procédé selon l'une quelconque des revendications 1 à 17, **caractérisé en ce qu'**un coussin d'air est formé entre la surface d'appui (I, II, III) et une plaque de verre (G) et une pièce coupée de la plaque de verre.

19. Dispositif pour la réalisation du procédé selon l'une quelconque des revendications 1 à 18, comprenant au moins un dispositif de séparation (A, B), muni d'au moins une surface d'appui (I, II, III) exécutée comme table, et comprenant au moins un dispositif pour le transport de plaques de verre (G) sur la table (I, II, III), **caractérisé en ce que** l'au moins une table (I, II) est orientable en descendant en direction d'un bord d'applique (21, 44, 45) ou qu'elle est ainsi orientée, **en ce que** le bord d'applique (21, 44, 45) est formé par une portion transporteuse (22) d'un convoyeur continu (20) qui est prévu dans la partie du bord d'applique (21, 45) pour des plaques de verre (G) resp. des pièces coupées de plaques de verre, et **en ce qu'**un dispositif (30, 31) est prévu pour le couplage par adhérence d'une plaque de verre (B) resp. d'une pièce coupée de la plaque de verre à la portion transporteuse du convoyeur (20).

20. Dispositif selon la revendication 19, **caractérisé en ce que** la table (I,II) est orientable en descendant, par élévation dans la partie de son bord (11, 40, 41) opposé au bord d'applique (21, 44, 45).

21. Dispositif selon la revendication 19 ou 20, **caractérisé en ce que** le bord d'applique (21, 45) équipé du convoyeur (20) est orienté normalement par rapport au dispositif de séparation (A, B) voisin à la table (I, II).

22. Dispositif selon l'une quelconque des revendications 19 à 21, **caractérisé en ce que** le dispositif pour le couplage par adhérence présente au moins un entraîneur (31) ayant prise sur la surface tournée vers le haut de la plaque de verre (G) resp. de la pièce coupée de la plaque de verre, au moyen duquel la plaque de verre (G) resp. la pièce coupée de la plaque de verre est chargeable contre la portion transporteuse (22) du convoyeur (20) formant le bord d'applique (21, 45).

23. Dispositif selon la revendication 22, **caractérisé en ce que** l'entraîneur est au moins une ventouse (31).

24. Dispositif selon la revendication 22 ou 23, **caractérisé en ce que** l'entraîneur (31) est guidé sur un rail de guidage (25) orienté en parallèle au convoyeur (20), par l'intermédiaire d'un chariot (30).

25. Dispositif selon la revendication 24, **caractérisé en ce que** l'au moins une ventouse (31) est installée dans le chariot (30) au moyen de moteurs à pression (32, 33), de façon à pouvoir être levée et baissée et déplacée horizontalement.

26. Dispositif selon l'une quelconque des revendications 19 à 25, **caractérisé en ce que** la table (I) située devant le premier dispositif de séparation (A) peut être dressée dans une position essentiellement verticale pour rabattre des plaques de verre (G) et qu'elle est ensuite à nouveau rabattable.

27. Dispositif selon l'une quelconque des revendications 19 à 26, **caractérisé en ce que** la table (II) placée entre les deux dispositifs de séparation (A, B) 45) étant respectivement opposés à l'un des dispositifs de séparation (A, B).

28. Dispositif selon l'une quelconque des revendications 19 à 27, **caractérisé en ce que** la surface d'appui des tables (I, II, III) est munie de roulettes.

29. Dispositif selon l'une quelconque des revendications 19 à 28, **caractérisé en ce que** des trous (15), qui peuvent être alimentés avec de l'air comprimé, aboutissent dans la surface d'appui des tables (I, II, III).

30. Dispositif selon la revendication 29, **caractérisé en ce que** la surface d'appui des tables (I, II, III) est formée par un support en feutre (18).

31. Dispositif selon l'une quelconque des revendications 19 à 30, **caractérisé en ce que** le premier dispositif de séparation (A) forme un angle avec l'horizontale et **en ce que** les tables (I, II) voisines à ce dispositif de séparation (A), en étant alignées mutuellement et dans leur position initiale par rapport à l'horizontale, incluent le même angle que le dispositif de séparation (A).

32. Dispositif selon l'une quelconque des revendications 19 à 31, **caractérisé en ce que** les tables (II, III) voisines au deuxième dispositif de séparation (B), alignées mutuellement dans leur position initiale, forment, par rapport à l'horizontale, le même angle que le premier dispositif de séparation (A).

33. Dispositif selon l'une quelconque des revendications 19 à 32, **caractérisé en ce que** dans la partie de la première table (I) est prévu un dispositif de transport (60) qui est orienté en parallèle au convoyeur (20, 30) placé au bord de la table (I) et normalement par rapport au premier point de séparation (A).

34. Dispositif selon la revendication 33, **caractérisé en ce que** le dispositif de transport (60) présente une courroie sans fin (20) qui est placée à distance de la surface d'appui de la table (I), et **en ce qu'**au moins un chariot (66) est prévu, comprenant un dispositif (31) pour coupler le chariot (66) à une plaque de verre (G) posée sur la table (I).

35. Dispositif selon la revendication 34, **caractérisé en ce que** le dispositif pour coupler le chariot (66) à la plaque de verre (G) est au moins une ventouse (31).

36. Dispositif selon la revendication 34 ou 35, **caractérisé en ce que** le chariot (66) peut être couplé à la courroie de transport (20).

37. Dispositif selon la revendication 36, **caractérisé en ce qu'**un poinçon applicable contre la courroie de transport (20) est prévu sur le chariot (66) pour coupler le chariot (66) à la courroie de transport (20).

38. Dispositif selon l'une quelconque des revendications 33 à 37, **caractérisé en ce qu'**au moins une butée (80) pour aligner un bord d'une plaque de verre (G) à transporter est prévue sur le dispositif de transport (60), la plaque de verre (G) étant orientée par application sur cette butée (80).

39. Dispositif selon la revendication 38, **caractérisé en ce que** le dispositif de butée présente au moins deux tiges (80) abaissables.

40. Dispositif selon l'une quelconque des revendications 33 à 39, **caractérisé en ce que** le dispositif de transport (60) comprend une barre (62) qui est installée d'une part sur le bâti de la machine et, d'autre part, sur la barre (64) du premier dispositif de séparation (A).
